(19) Europäisches Patentamt
European Patent Office
Office européen des brevets

(11) **EP 3 165 957 A1**

(12) **EUROPEAN PATENT APPLICATION**

(43) Date of publication:
**10.05.2017 Bulletin 2017/19**

(51) Int Cl.:
**G02B 13/00** (2006.01)    **G02B 9/34** (2006.01)

(21) Application number: **15193260.5**

(22) Date of filing: **05.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Himax Technologies Limited
Tainan City (TW)**

(72) Inventors:
• LIN, Han-Ching
  **74148 Tainan City (TW)**
• KUO, Han Yi
  **74148 Tainan City (TW)**

(74) Representative: **Karakatsanis, Georgios
Haft Karakatsanis Patentanwaltskanzlei
Dietlindenstrasse 18
80802 München (DE)**

(54) **ARRAY LENS SYSTEM**

(57)    An array lens system composed of a plurality of array lenses, each includes a first optical device with a first reflection surface, a positive-powered first lens group, a positive-powered second lens group, a negative-powered third lens group, a second optical device with a second reflection surface, and a negative-powered fourth lens group arranged in an order from an object side to an image side.

FIG.1A

**Description**

**BACKGROUND OF THE INVENTION**

**1. FIELD OF THE INVENTION**

The present invention generally relates to an array lens system, and more particularly to an array lens system with a right-angle prism.

**2. DESCRIPTION OF RELATED ART**

Wafer level optics is a technique of fabricating miniaturized optics such as lens module or camera module at the wafer level using semiconductor techniques. The wafer level optics is well adapted to mobile or handheld devices, to which photograph has become an indispensable function.

As the size of an image sensor, such as a charge-coupled devices (CCD) or a complementary metal-oxide-semiconductor image sensor (CIS), is scaled down, the photographic lens need be scaled down too.

Imaging lens design is a stringent process to achieve requirements such as low volume, light weight, low cost but high resolution. There is a need for a designer to propose a novel imaging optical device, particularly a wafer-level miniaturized optical device that has high image quality with low volume and light weight.

**SUMMARY OF THE INVENTION**

In view of the foregoing, it is an object of the embodiment of the present invention to provide an array lens system that has high image quality with low volume and light weight.

According to one embodiment, an array lens system composed of a plurality of array lenses, each includes a first optical device with a first reflection surface, a positive-powered first lens group, a positive-powered second lens group, a negative-powered third lens group, a second optical device with a second reflection surface, and a negative-powered fourth lens group arranged in an order from an object side to an image side.

**BRIEF DESCRIPTION OF THE DRAWINGS**

FIG. 1A shows a lens arrangement of an array lens according to one embodiment of the present invention;
FIG. 1B schematically shows a top view of an array lens system that is composed of a plurality of array lenses of FIG. 1A;
FIG. 2 shows a lens track of the array lens of FIG. 1A; and
FIG. 3 shows a lens track of an array lens according to an alternative embodiment of the present invention.

**DETAILED DESCRIPTION OF THE INVENTION**

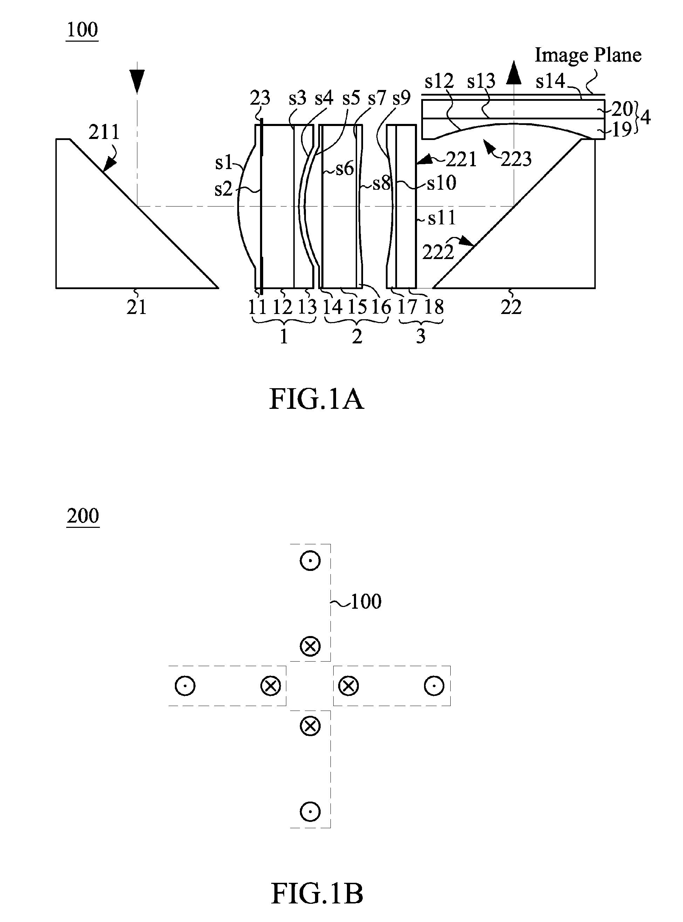

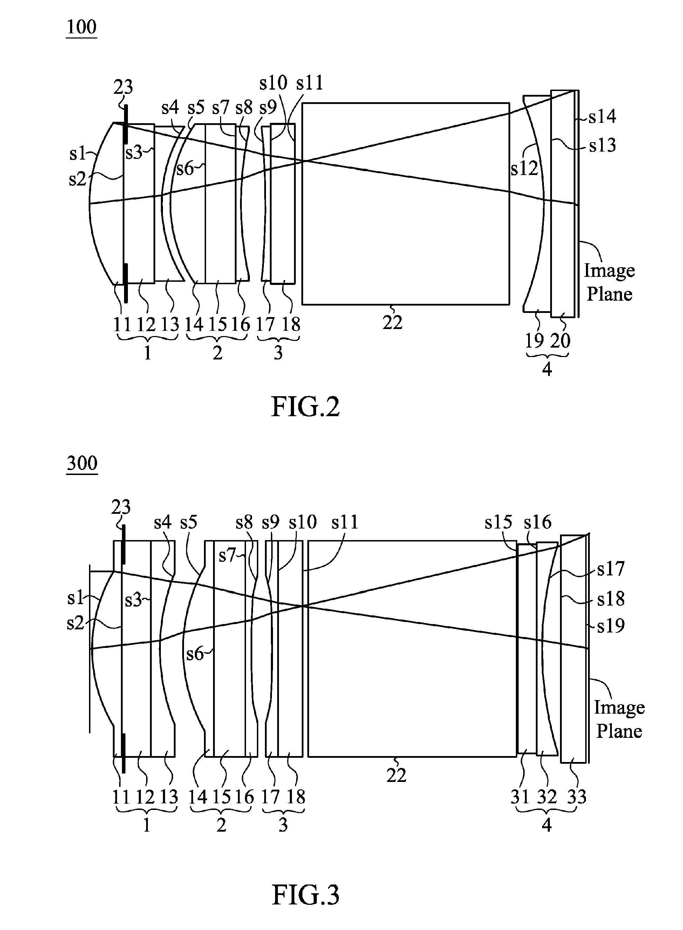

FIG. 1A shows a lens arrangement of an array lens 100 according to one embodiment of the present invention. FIG. 1B schematically shows a top view of an array lens system 200 that is composed of a plurality (e.g., four) of array lenses 100, where symbol dot (·) represents an incoming light and symbol cross (x) represents an outgoing light. FIG. 2 shows a lens track of the array lens 100 of FIG. 1A. The array lens 100 of the embodiment may be preferably fabricated by wafer-level optics (WLO) technique. The array lens 100 of the embodiment may be composed of a transparent material such as glass or plastic. In the drawing, the upper-left side of the array lens 100 faces an object, and the upper-right side of the array lens 100 faces an image plane.

In the embodiment, the array lens 100 may include, in the order from the object side to the image side, a first optical device 21 (with a first reflection surface 211), a positive-powered first lens group 1 (that is, a lens group with positive refractive power), a positive-powered second lens group 2, a negative-powered third lens group 3 (that is, a lens group with negative refractive power), a second optical device 22 (with a second reflection surface 222) and a negative-powered fourth lens group 4.

In a specific embodiment as illustrated in FIG. 1A, the first optical device 21 may include a mirror. In another embodiment, however, the first optical device 21 may, for example, include a prism. The first optical device 21 of the embodiment may be adjustable to adapt to a required angle of the incoming light. The second optical device 22 may include a prism. In another embodiment, the second optical device 22 may, for example, include a mirror.

Specifically, the positive-powered first lens group 1 may include, in the order from the object side to the image side, a convex first lens 11, an aperture (or stop) 23, a flat second lens 12 and a concave third lens 13. To be more specific, the convex first lens 11 has an aspherical convex object-side surface s1 and a planar image-side surface s2. The flat second lens 12 has a planar object-side surface s2 and a planar image-side surface s3. The concave third lens 13 has a planar object-side surface s3 and a concave image-side surface s4. In the embodiment, the convex first lens 11 is in substantially contact with the flat second lens 12, which is further in substantially contact with the concave third lens 13.

The positive-powered second lens group 2 may include, in the order from the object side to the image side, a convex fourth lens 14, a flat fifth lens 15 and a concave sixth lens 16. To be more specific, the convex fourth lens 14 has an aspherical convex object-side surface s5 and a planar image-side surface s6. The flat fifth lens 15 has a planar object-side surface s6 and a planar image-side surface s7. The concave sixth lens 16 has a planar object-side surface s7 and a concave image-side surface s8. In the embodiment, the convex fourth lens 14 is in substantially contact with the flat fifth lens 15, which is further in substantially contact with the concave sixth lens 16.

The negative-powered third lens group 3 may include, in the order from the object side to the image side, a concave seventh lens 17 and a flat eighth lens 18. To be more specific, the concave seventh lens 17 has an aspherical concave object-side surface s9 and a planar image-side surface s10. The flat eighth lens 18 has a planar object-side surface s10 and a planar image-side surface s11. In the embodiment, the concave seventh lens 17 is in substantially contact with the flat eighth lens 18.

The negative-powered fourth lens group 4 may include, in the order from the object side to the image side, a concave ninth lens 19 and a flat tenth lens 20. To be more specific, the concave ninth lens 19 has an aspherical concave object-side surface s12 and a planar image-side surface s13. The flat tenth lens 20 has a planar object-side surface s13 and a planar image-side surface s14. In the embodiment, the concave ninth lens 19 is in substantially contact with the flat tenth lens 20.

As shown in FIG. 1A, an incident light enters a first surface 221 of the second optical device 22, is reflected by the second reflection surface 222, and then leaves a third surface 223 of the second optical device 22. In the embodiment, the first surface 221 and the third surface 223 have a right angle therebetween, thereby forming a right-angle prism.

In an exemplary embodiment, the array lens 100 may further include an infra-red filter (not shown) coated on at least one surface of the flat second lens 12, the flat fifth lens 15, the flat eighth lens 18 or the flat tenth lens 20.

According to one aspect of the embodiment, the convex first lens 11, the convex fourth lens 14 and the concave sixth lens 16 have a refractive index ranging between 1.512 and 1.52, and have an Abbe number ranging between 48.7 and 56.5. In a more specific embodiment, a difference between Abbe number V1 of the convex first lens 11 and Abbe number V2 of the concave third lens 13 is in a range between 17 and 25 (i.e., 17<V1-V2<25).

According to another aspect of the embodiment, the flat second lens 12, the flat fifth lens 15, the flat eighth lens 18 and the flat tenth lens 20 have a refractive index ranging between 1.5 and 1.6, and have an Abbe number ranging between 40 and 60. In a more specific embodiment, a ratio of focal length EF34 of the positive-powered second lens group 2 to focal length EF12 of the positive-powered first lens group 1 is in a range between 0.01 and 0.28 (i.e., 0.01<EF34/EF12<0.28).

FIG. 3 shows a lens track of an array lens 300 according to an alternative embodiment of the present invention. In the embodiment, the negative-powered fourth lens group 4 may include, in the order from the object side to the image side, a flat eleventh lens 31, a concave twelfth lens 32 and a flat thirteenth lens 33. To be more specific, the flat eleventh lens 31 has a planar object-side surface s15 and a planar image-side surface s16. The concave twelfth lens 32 has a planar object-side surface s16 and an aspherical concave image-side surface s17. The flat thirteenth lens 33 has a planar object-side surface s18 and a planar image-side surface s19. In the embodiment, the flat eleventh lens 31 is in substantially contact with the concave twelfth lens 32.

The refractive index and the Abbe number of the present embodiment are similar to the previous embodiment. Moreover, the flat eleventh lens 31 and the flat thirteenth lens 33 have a refractive index ranging between 1.5 and 1.6, and have an Abbe number ranging between 40 and 60.

The aspheric surface (e.g., s1, s4, s5, s8, s9, s12 or s17) may be defined by the following equation:

$$z = \frac{cr^2}{1+\sqrt{1-(1+k)c^2r^2}} + \alpha_1 r^2 + \alpha_2 r^4 + \alpha_3 r^6 + \alpha_4 r^8 + \alpha_5 r^{10} + \alpha_6 r^{12} + \alpha_7 r^{14} + \alpha_8 r^{16}$$

where z is a distance from a vertex of lens in an optical axis direction, r is a distance in the direction perpendicular to the optical axis, c is a reciprocal of radius of curvature on vertex of lens, k is a conic constant and $\alpha_1$ to $\alpha_8$ are aspheric coefficients. It is noted that the array lenses 100 of the array lens system 200 (FIG. 1B) may have the same or different parameters of the above equation.

Although specific embodiments have been illustrated and described, it will be appreciated by those skilled in the art that various modifications may be made without departing from the scope of the present invention, which is intended to be limited solely by the appended claims.

**Claims**

1. An array lens system composed of a plurality of array lenses, each comprising:

   a first optical device with a first reflection surface;
   a positive-powered first lens group;
   a positive-powered second lens group;
   a negative-powered third lens group;
   a second optical device with a second reflection surface; and
   a negative-powered fourth lens group;
   wherein the first optical device, the positive-powered first lens group, the positive-powered second lens group, the negative-powered third lens group, the second optical device and the negative-powered fourth lens group are arranged in an order from an object side to an image side.

2. The array lens system of claim 1, wherein the second optical device comprises a right-angle prism.

3. The array lens system of claim 1, wherein the positive-powered first lens group comprises a convex first lens, an aperture, a flat second lens and a concave third lens arranged in the order from the object side to the image side.

4. The array lens system of claim 3, wherein the positive-powered second lens group comprises a convex fourth lens, a flat fifth lens and a concave sixth lens arranged in the order from the object side to the image side.

5. The array lens system of claim 4, wherein the negative-powered third lens group comprises a concave seventh lens and a flat eighth lens arranged in the order from the object side to the image side.

6. The array lens system of claim 5, wherein the negative-powered fourth lens group comprises a concave ninth lens and a flat tenth lens arranged in the order from the object side to the image side.

7. The array lens system of claim 5, wherein the convex first lens, the convex fourth lens and the concave sixth lens have a refractive index ranging between 1.512 and 1.52.

8. The array lens system of claim 5, wherein the convex first lens, the convex fourth lens and the concave sixth lens have an Abbe number ranging between 48.7 and 56.5.

9. The array lens system of claim 5, wherein a difference between Abbe number of the convex first lens and Abbe number of the concave third lens is in a range between 17 and 25.

10. The array lens system of claim 6, wherein the flat second lens, the flat fifth lens, the flat eighth lens and the flat tenth lens have a refractive index ranging between 1.5 and 1.6.

11. The array lens system of claim 6, wherein the flat second lens, the flat fifth lens, the flat eighth lens and the flat tenth lens have an Abbe number ranging between 40 and 60.

12. The array lens system of claim 1, wherein a ratio of focal length of the positive-powered second lens group to focal length of the positive-powered first lens group is in a range between 0.01 and 0.28.

13. The array lens system of claim 5, wherein the negative-powered fourth lens group comprises a flat eleventh lens, a concave twelfth lens and a flat thirteenth lens arranged in the order from the object side to the image side.

14. The array lens system of claim 13, wherein the flat second lens, the flat fifth lens, the flat eighth lens, the flat eleventh lens and the flat thirteenth lens have a refractive index ranging between 1.5 and 1.6.

15. The array lens system of claim 13, wherein the flat second lens, the flat fifth lens, the flat eighth lens, the flat eleventh lens and the flat thirteenth lens have an Abbe number ranging between 40 and 60.

FIG.1A

FIG.1B

100

FIG.2

300

FIG.3

Europäisches
Patentamt

European
Patent Office

Office européen
des brevets

# EUROPEAN SEARCH REPORT

Application Number

EP 15 19 3260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/288865 A1 (OSBORNE THOMAS WESLEY [US]) 8 October 2015 (2015-10-08) <br> * paragraph [0051] - paragraph [0068]; figures 1A-B * <br> * figure 8C * <br> * paragraph [0118] - paragraph [0120]; figure 9 * <br> ----- | 1-15 | INV. <br> G02B13/00 <br> G02B9/34 |
| X | US 2007/024739 A1 (KONNO KENJI [JP]) 1 February 2007 (2007-02-01) <br> * paragraph [0137] - paragraph [0139]; figure 16 * <br> ----- | 1,2 | |
| X | US 6 744 570 B1 (ISONO MASASHI [JP]) 1 June 2004 (2004-06-01) <br> * column 3, line 19 - line 50; figures 1-4 * <br> * column 6, line 46 - column 7, line 38 * <br> ----- | 1 | |
| A | US 2011/124373 A1 (FUKUTA YASUNARI [JP]) 26 May 2011 (2011-05-26) <br> * paragraph [0145]; figure 1 * <br> ----- | 3-15 | TECHNICAL FIELDS SEARCHED (IPC) <br><br> G02B |

The present search report has been drawn up for all claims

| Place of search | Date of completion of the search | Examiner |
|---|---|---|
| Berlin | 14 April 2016 | A. Jacobs |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 19 3260

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2016

| Patent document cited in search report | | Publication date | Patent family member(s) | | Publication date |
|---|---|---|---|---|---|
| US 2015288865 | A1 | 08-10-2015 | US 2015288865 A1<br>WO 2015153200 A1 | | 08-10-2015<br>08-10-2015 |
| US 2007024739 | A1 | 01-02-2007 | JP 5364965 B2<br>JP 2007033819 A<br>US 2007024739 A1 | | 11-12-2013<br>08-02-2007<br>01-02-2007 |
| US 6744570 | B1 | 01-06-2004 | JP 3695449 B2<br>JP 2004233654 A<br>US 6744570 B1 | | 14-09-2005<br>19-08-2004<br>01-06-2004 |
| US 2011124373 | A1 | 26-05-2011 | CN 102099722 A<br>US 2011124373 A1<br>WO 2010010891 A1 | | 15-06-2011<br>26-05-2011<br>28-01-2010 |

EPO FORM P0459

For more details about this annex : see Official Journal of the European Patent Office, No. 12/82